# EUROPÄISCHE PATENTSCHRIFT

(11) **EP 4 037 183 B1**
(45) Veröffentlichungstag und Bekanntmachung des Hinweises auf die Patenterteilung: **18.09.2024**
(21) Anmeldenummer: 22151946.5
(22) Anmeldetag: 18.01.2022
(51) Int. Cl.: H02P 29/64, H02P 29/032, H02P 5/00, H02P 6/04

(54) **THERMISCHE ÜBERWACHUNG ZWEIER MOTOREN**
THERMAL MONITORING OF TWO MOTORS
SURVEILLANCE THERMIQUE DE DEUX MOTEURS

(30) Priorität: 28.01.2021 BE 202105065
(43) Veröffentlichungstag der Anmeldung: 03.08.2022
(73) Patentinhaber: Miele & Cie. KG, 33332 Gütersloh (DE)
(72) Erfinder: Rodehüser, Tobias, 59329 Wadersloh (DE); Neufeld, Alexander, 33619 Bielefeld (DE)

(56) Entgegenhaltungen:
- EP-A1- 2 731 218
- DE-A1- 102014 008 642
- DE-A1- 102018 109 248
- KR-A- 20200 084 835

## Beschreibung

Die Erfindung betrifft eine Ansteuerungsvorrichtung zur thermischen Überwachung von wenigstens zwei mindestens zweiphasigen Motoren gemäß dem Patentanspruch 1 sowie ein Haushaltsgerät mit einer derartigen Ansteuerungsvorrichtung gemäß dem Patentanspruch 8.

Zu den elektrischen Antrieben gehören die Synchronmotoren als Einphasen- oder Drehstrom-Synchronmaschinen im Motorbetrieb. Der Rotor bzw. der Läufer weist eine konstante Magnetisierung auf, welche im Betrieb synchron von einem bewegten magnetischen Drehfeld im Stator mitgenommen wird, woraus sich die Dreh- bzw. Rotationsbewegung des Rotors innerhalb des Stators bzw. Ständers ergibt. Mit anderen Worten wird die, üblicherweise dreisträngige, Drehstromwicklung des Stators durch eine geeignete Schaltung derart angesteuert, dass seitens der Spulen des Stators ein wanderndes magnetisches Feld erzeugt wird, welches den Rotor mitzieht und hierdurch in Rotation versetzt. Die Dreh- bzw. Rotationsbewegung des Rotors des laufenden Synchronmotors ist dabei synchron zur Wechselspannung der Wicklungen des Stators. Die Drehzahl der Drehbewegung des Rotors ist über die Polpaarzahl der Wicklungen des Stators mit der Frequenz der Wechselspannung verknüpft.

Zum anderen kann das magnetische Feld des Rotors durch Permanentmagnete erzeugt werden, was als Selbsterregung bezeichnet wird. In diesem Fall kann auf die elektrische Kontaktierung zwischen Stator und Rotor verzichtet werden. Dies kann die zuvor genannten Nachteile vermeiden sowie insgesamt das Gewicht, den Bauraum und die Kosten derartiger permanenterregter Synchronmotoren geringhalten. Derartige permanenterregte Synchronmotoren mit einer schaltenden Elektronik werden daher üblicherweise auch als bürstenlose Motoren (Englisch: Brushless direct current motor - kurz: BLDC-Motor) bezeichnet. Die Spulenstränge des Stators können über einen Vierquadrantensteller angesteuert werden. Die Elektronik zur Ansteuerung der Brücke ist ein geregelter Frequenzumrichter. Üblicherweise werden bürstenlose Motoren dreiphasig ausgebildet, da sie dann den Vorteil einer definierten Läuferstellung bei hoher Dynamik, hohem Drehmoment und hoher Effizienz aufweisen.

Charakteristisch für bürstenlose Motoren ist ihre Kommutierung, welche zum Beispiel bei einem dreiphasigen Stator aus sechs Blöcken bzw. Sektoren pro Drehfelddurchlauf, d.h. pro Motorumdrehung, besteht, welche sich jeweils vom Schaltzustand der Brückenschaltung unterscheiden. Dabei sind immer lediglich zwei Gegentaktstufen der Brücke aktiv und die dritte Gegentaktstufe befindet sich im Zustand "floating". Die Spannung an diesem Brückenpunkt wird durch das Schaltungsnetz gemäß dem Stern-Ersatzschaltbild definiert. Die Brückensteuerung sorgt dafür, dass immer die Motorphase "floating" ist, welche - bei trapezoider Gegenspannung - gerade die Polarität wechselt.

Da die Brückensteuerung automatisch weiterschaltet, befindet sich das Statorfeld immer in dem Block mit der optimalen Magnetflussänderung, d.h. mit der maximalen Generatorspannung. Der bürstenlose Motor dreht somit hoch, bis seine Generatorspannung der Versorgungsspannung entspricht. Dann ist die maximale Drehzahl bzw. die Betriebsdrehzahl erreicht und wird konstant gehalten. Eine Steuerung bzw. Änderung der Drehzahl des Rotors kann somit über die Änderung der Versorgungsspannung erfolgen.

Die Steuerung der Kommutierung erfolgt in Abhängigkeit der aktuellen Rotorposition, welche über wenigstens einen Positionssensor zum Beispiel als Hall-Sensor erfasst werden kann, was jedoch zu einem entsprechenden zusätzlichen Aufwand bzw. zu entsprechenden Kosten führt sowie Bauraum erfordert.

Alternativ kann daher eine sensorlose Kommutierung umgesetzt und auf Positionssensoren verzichtet werden, indem die aktuelle Rotorposition indirekt durch die Messung von elektrischen Parametern an den Spulen gewonnen wird. Hierzu kann beispielsweise die in den Spulen des Stators ausgelöste EMK (elektromotorische Kraft) erfasst und von der elektronischen Steuerschaltung ausgewertet werden, was jedoch erst ab einer gewissen Mindestdrehzahl erfolgen kann.

Mit anderen Worten ist ein bürstenloser Motor (BLDC-Motor) konstruktiv gesehen eine Drehfeldmaschine, welche keinen mechanischen Kommutator benötigt. Der Rotor beinhaltet einen oder mehrere Permanentmagnete. Durch die Wechselwirkung zwischen Statorfeld und Rotorfeld entsteht ein elektrisches Moment, das zu einer Rotation führen kann.

Zum Betrieb eines bürstenlosen Motors ist üblicherweise ein Motorumrichter notwendig. Der Motorumrichter beinhaltet üblicherweise im Wesentlichen ein Controller sowie Leistungshalbleiter zur Ansteuerung der Motorphasen. Außerdem ist üblicherweise ein Zwischenkreis vorhanden, aus dem der bürstenlose Motor gespeist wird.

Anders als die unter dem Begriff permanenterregte Synchron-Maschinen (PMSM) oder PMAC bekannten Motoren werden bei einem bürstenlosen Motor z.B. jeweils nur zwei Phasen von drei gleichzeitig bestromt und die dritte Phase ist stromlos. Die Auswahl der zu bestromenden Phasen ist von der Rotorlage abhängig. Der Übergang von einem Sektor bzw. Block zum nächsten wird auch "elektronische Kommutierung" genannt; deswegen auch die Bezeichnung "brushless" oder "elektronisch kommutiert". Die für die Kommutierung eines bürstenlosen Motors notwendige Information über die Rotorlage wird üblicherweise über einen Lagesensor wie beispielsweise Hall-Sensoren, Resolver oder Inkrementalgeber gemessen.

Aus dem Stand der Technik sind verschiedene Lösungen bekannt, die diese Kommutierung ohne einen Lagesensor erlauben. Der am meisten verbreitete Ansatz der sensorlosen Ansteuerung basiert darauf, die Rotorlage und die Kommutierungszeitpunkte durch Messung der induzierten Spannung in der inaktiven Phase zu ermitteln. Die Spannungspotenziale der Motorphase und des Motorsternpunkts werden über Spannungsteiler miteinander verglichen und der Nullübergang wird als Referenzzeitpunkt für die Kommutierung genommen.

Bei bürstenlosen Motoren, bei denen der Sternpunkt nicht physikalisch herausgeführt ist (etwa bei einer Dreieck-Schaltung), kann ein Sternpunkt künstlich durch drei in Stern geschaltete Widerstände nachgebildet werden. Das Spannungspotential des künstlichen Sternpunkts wird dann anschließend mit dem Spannungspotential der inaktiven Phase, zum Beispiel über einen Komparator, verglichen. Der Nulldurchgang dieser Differenz wird als Referenzzeitpunkt für die Kommutierung genommen.

Bei derartigen bürstenlosen Motoren kann es zu einer Übererwärmung kommen, falls die Phasen seitens des geregelten Frequenzumrichters wie zuvor beschrieben bestromt werden, jedoch die hierdurch zu bewirkende Drehbewegung des Rotors mechanisch vollständig blockiert oder zumindest behindert wird. Letzteres kann auch auf einer Schwergängigkeit des Rotors bzw. des anzutreibenden mechanischen Elements beruhen. Ferner kann auch eine falsche bzw. fehlerhafte Ansteuerung des geregelten Frequenzumrichters bzw. der Ansteuerhardware dazu führen, dass die zu bewirkende Drehbewegung des Rotors gar nicht oder nur unzureichend erzeugt werden kann.

In jedem Fall kann die dennoch erfolgende Bestromung der Phasen zu einer Erwärmung der Spulen des Stators führen, welche dessen zulässige Temperatur übersteigen und somit den bürstenlosen Motor überhitzen kann. Dies kann zu Beschädigungen der Spulen, des geregelten Frequenzumrichters sowie weiterer elektronischer Elemente und ggfs. zu einem Ausfall des bürstenlosen Motors führen.

Dies kann insbesondere bei bürstenlosen Motoren der Fall sein, welche ein durch ihren Rotor antreibbares Lüfterrad besitzen, welches der Erzeugung eines Luftstroms während der Rotation des Rotors dient und hierdurch den bürstenlosen Motor selbsttätig kühlen kann. Durch den Stillstand des Rotors fällt somit auch dessen selbsttätige Luftkühlung aus bzw. wird bei zu geringer Drehzahl des Rotors entsprechend in ihrer Wirkung gemindert, so dass die gewünschte Wirkung der Luftkühlung nicht erreicht werden kann.

Daher ist es üblich, bei derartigen bürstenlosen Motoren eine thermische Überwachung vorzusehen und bei Erreichen einer vorbestimmten Grenztemperatur den bürstenlosen Motor selbsttätig abzuschalten oder zumindest in seiner Leistung zu reduzieren, um eine thermische Überlastung durch Übererwärmung bzw. durch Überhitzung zu vermeiden.

Derartige thermische Überwachungen werden üblicherweise indirekt umgesetzt, indem nicht die Temperatur des bürstenlosen Motors selbst sensorisch erfasst, sondern ein Temperatursensor in der Nähe des bürstenlosen Motors bzw. dessen Statorspulen vorgesehen wird, welcher die Umgebungstemperatur der Luft erfassen kann. Somit wird die Temperatur der Luft in der Umgebung der Spulen des Stators des bürstenlosen Motors sensorisch erfasst und auf deren Temperatur wie zuvor beschrieben reagiert.

Eine derartige indirekte Temperaturüberwachung kann üblicherweise einen ausreichenden Schutz vor Übererwärmung bzw. Überhitzung bei derartigen bürstenlosen Motoren bieten, falls auf eine langsame Erwärmung des bürstenlosen Motors reagiert werden soll, welche ausreichend Zeit hat, die Umgebungstemperatur zu erwärmen und so von dem Temperatursensor erfasst zu werden. Dies kann bei einer reduzierten Drehzahl des Rotors des bürstenlosen Motors der Fall sein.

Kommt es, zum Beispiel aufgrund eines Stillstands des Rotors des bürstenlosen Motors, zu einer sehr schnellen Erwärmung der Statorspulen des bürstenlosen Motors, so kann dies üblicherweise über die zuvor beschriebene indirekte thermische Überwachung nicht ausreichend schnell erkannt werden, um hierauf reagieren und Beschädigungen des bürstenlosen Motors vermeiden zu können. Dies ist dadurch begründet, dass die thermische Kopplung zwischen den Statorspulen des bürstenlosen Motors und dem Temperatursensor, welche üblicherweise über mehrere Zentimeter Umgebungsluft erfolgt, derart schlecht ist bzw. langsam erfolgt, dass die hierdurch bewirkte Zeitverzögerung zu groß ist, um die Übererwärmung bzw. die Übererhitzung der Spulen des bürstenlosen Motors ausreichend schnell sensorisch erfassen zu können, als dass hierauf durch Abschaltung des bürstenlosen Motors noch wirkungsvoll reagiert werden könnte.

Zu beachten ist ferner, dass der Temperatursensor in der Umgebung der Spulen des bürstenlosen Motors sowie dessen Elektronik zusätzliche Kosten verursacht sowie Bauraum erfordert.

Zur weiteren Erhöhung der Sicherheit des überwachten bürstenlosen Motors werden derartige thermische Überwachungen üblicherweise redundant vorgesehen, d.h. die gleichen thermischen Überwachungen werden wenigstens doppelt sowie parallel und unabhängig voneinander arbeitend vorgesehen, um die zuvor beschriebe thermische Überwachung als Sicherheitsfunktion auch dann weiterhin zur Verfügung stellen zu können, falls eine der beiden thermischen Überwachungen fehlerhaft bzw. ausgefallen ist. Dies führt zwar zu einem entsprechen erhöhten Aufwand hinsichtlich Kosten und Bauraum sowie zu einem zusätzlichen Bedarf an elektrischer Energie. Da die thermische Überwachung von bürstenlosen Motoren jedoch ein sicherheitskritischer Faktor ist, kann dieser Aufwand hierdurch gerechtfertigt werden. Dies kann sogar dazu führen, dass drei thermische Überwachung parallel vorgesehen werden, um eine Übererwärmung bzw. Überhitzung des bürstenlosen Motors sicher erkennen bzw. verhindern zu können.

Die DE 102014008642 A1 bezieht sich auf eine Temperaturschätzvorrichtung, die eine Temperatur eines Leistungshalbleiterchips schätzt, der für eine Temperaturschätzung ausgewählt ist und der einer oder einer von mehreren Leistungshalbleiterchips ist, die in einem Leistungshalbleitermodul enthalten sind, deren Anzahl gleich oder größer als die Anzahl von Motoren ist und die in dem gleichen Kühlkörper für das Betreiben einer Vielzahl von Motoren angeordnet sind.

Die KR 20200084835 A betrifft einen Staubsauger mit einer Trommel mit einer darin installierten Bürste, einem ersten Motor zum Drehen der Trommel, einen Sensor zum Erfassen einer an den ersten Motor angelegten Last, einen zweiten Motor zum Erzeugen eines Saugdrucks, und einen Prozessor zum Steuern des ersten Motors oder des zweiten Motors auf der Grundlage der Last.

Die EP 2731218 A1 betrifft einen Frequenzumrichter zum Betreiben eines elektrischen Motors, umfassend einen Gleichrichter, einen Wechselrichter mit gesteuerten Halbbrücken, zum Ein- und Ausschalten der Stromzufuhr für zumindest eine Wicklung eines einphasigen oder mehrphasigen elektrischen Motors, eine Steuereinrichtung zum Ansteuern der Halbbrücken, und ferner eine Vorrichtung zum Ermitteln des Stromes in zumindest einer Zuführungsleitung zu dem Frequenzumrichter. Um auf einfache Weise eine Überwachung auf unzulässige Überlast bereitzustellen, ist die Vorrichtung dazu eingerichtet, einen Summenstrom anhand von einzeln erfassten Phasenströmen mittels der Steuereinrichtung zu ermitteln.

Der Erfindung stellt sich das Problem, eine Ansteuerungsvorrichtung zur thermischen Überwachung von wenigstens zwei mindestens zweiphasigen Motoren bereitzustellen, von denen zumindest einer ein bürstenloser Motor ist, so dass deren redundante thermische Überwachung mit einem reduzierten Aufwand erfolgen kann. Dies soll insbesondere möglichst einfach, kostengünstig und bzw. oder flexibel umgesetzt werden können. Zumindest soll eine Alternative zu bekannten derartigen Ansteuerungsvorrichtungen geschaffen werden.

Erfindungsgemäß wird dieses Problem durch eine Ansteuerungsvorrichtung mit den Merkmalen des Patentanspruchs 1 gelöst. Vorteilhafte Ausgestaltungen und Weiterbildungen der Erfindung ergeben sich aus den nachfolgenden Unteransprüchen.

Somit betrifft die Erfindung eine Ansteuerungsvorrichtung zur thermischen Überwachung von wenigstens zwei mindestens zweiphasigen Motoren, vorzugsweise ohne Rotorlagesensor, mit einem ersten Rechner, welcher ausgebildet ist, sowohl den ersten bürstenlosen Motor als auch den zweiten Motor thermisch zu überwachen, und mit einem zweiten Rechner, welcher ausgebildet ist, sowohl den ersten bürstenlosen Motor als auch den zweiten Motor thermisch zu überwachen.

Mit anderen Worten werden erfindungsgemäß zwei, vorzugweise ohnehin vorhandene, Rechner der Ansteuerungsvorrichtung dazu verwendet, nicht nur jeweils den "eigenen" Motor sowohl zu betreiben als auch thermisch zu überwachen, sondern zusätzlich jeweils auch eine thermische Überwachung des "fremden" Motors des anderen Rechners auszuführen. Hierdurch kann die Aufgabe einer redundanten thermischen Überwachung vom jeweils anderen Rechner zusätzlich übernommen und hierdurch auf zusätzliche Rechner oder analoge Schaltkreise zu diesem Zweck verzichtet werden, um die entsprechenden Kosten, den entsprechenden Bauraum sowie den entsprechenden elektrischen Energieverbrauch zu sparen.

Somit kann jeder Rechner den eigenen Motor überwachen und im Falle einer erkannten thermischen Überlastung dessen Betrieb entsprechend selbst anpassen bzw. einstellen. Wird von einem Rechner eine thermische Überlastung des "fremden" Motors erkannt, so kann dieser Rechner den anderen Rechner des "fremden" Motors darüber informieren und hierdurch dazu veranlassen, den Betrieb des "fremden" Motors entsprechend anzupassen bzw. einzustellen.

Gemäß der Erfindung sind beide Rechner ausgebildet, jeweils sowohl den ersten bürstenlosen Motor als auch den zweiten Motor in der Leistung zu reduzieren oder anzuhalten, falls von wenigstens einem der beiden Rechner eine thermische Überlastung erkannt wird. Dies kann die Sicherheit erhöhen, indem bereits das Erkennen einer thermischen Überlastung eines Motors durch lediglich einen der beiden Rechner ausreicht, um hierauf eine Reaktion auszulösen. Dies kann die Umsetzung der thermischen Überwachung sicherstellen, falls diese Funktion bei dem anderen der beiden Rechner nicht funktioniert.

Gemäß einem weiteren Aspekt der Erfindung sind beide Rechner ausgebildet, jeweils sowohl den ersten bürstenlosen Motor als auch den zweiten, bevorzugt ebenfalls bürstenlosen, Motor in der Leistung zu reduzieren oder anzuhalten, falls von beiden Rechnern eine thermische Überlastung erkannt wird. Hierdurch kann vermieden werden, dass die Funktion der thermischen Überwachung bei lediglich einem der beiden Rechner zu einem Erkennen einer vermeintlichen thermischen Überwachung führt, indem dies erst durch den zweiten Rechner bestätigt werden muss, um auch tatsächlich eine Reaktion auszulösen. Hierdurch kann eine unnötige bzw. ungerechtfertigte Reaktion auf einen unzutreffend eingeschätzten Zustand des entsprechenden Motors vermieden werden.

Gemäß einem weiteren Aspekt der Erfindung weist die Ansteuerungsvorrichtung einen ersten Strommesser des ersten bürstenlosen Motors auf, welcher ausgebildet ist, einen Phasenstrom des ersten bürstenlosen Motors zu erfassen und dem ersten Rechner zur Verfügung zu stellen, und einen zweiten Strommesser des ersten bürstenlosen Motors, welcher ausgebildet ist, den Phasenstrom des ersten bürstenlosen Motors zu erfassen und dem zweiten Rechner zur Verfügung zu stellen, wobei die beiden Rechner ausgebildet sind, jeweils die beiden erfassten Phasenströme des ersten bürstenlosen Motors miteinander zu vergleichen und im Falle einer vorbestimmten Abweichung den ersten bürstenlosen Motor in der Leistung zu reduzieren oder anzuhalten.

Hierdurch kann eine zusätzliche Sicherheitsfunktion umgesetzt werden, indem der zweifach und unabhängig voneinander erfasste Phasenstrom des ersten bürstenlosen Motors durch die beiden Rechner verglichen und auf Plausibilität überprüft wird. Dies kann durch Differenzbildung der beiden Werte des Phasenstroms erfolgen, wobei die ermittelte Differenz innerhalb einer vorstimmten Toleranz liegen muss, damit die beiden Werte des Phasenstroms als plausibel bewertet und jeweils vom entsprechenden Rechner zur Durchführung der zuvor beschriebenen thermischen Überwachung verwendet werden.

Wird diese Toleranz nicht eingehalten, so kann hierdurch eine der beiden Messungen des Phasenstroms als fehlerhaft angesehen werden. In diesem Fall kann die Verlässlichkeit der thermischen Überwachung, welche auf den beiden erfassten Phasenströmen beruht, nicht mehr gegeben sein. Entsprechend kann der Betrieb des entsprechenden Motors reduziert oder eingestellt werden, da dessen thermische Überwachung nicht mehr sicher erfolgen kann.

Gemäß einem weiteren Aspekt der Erfindung weist die Ansteuerungsvorrichtung einen ersten Strommesser des zweiten Motors, welcher ausgebildet ist, einen Phasenstrom des zweiten Motors zu erfassen und dem zweiten Rechner zur Verfügung zu stellen, und einen zweiten Strommesser des zweiten Motors, welcher ausgebildet ist, den Phasenstrom des zweiten Motors zu erfassen und dem ersten Rechner zur Verfügung zu stellen, wobei die beiden Rechner ausgebildet sind, jeweils die beiden erfassten Phasenströme des zweiten Motors miteinander zu vergleichen und im Falle einer vorbestimmten Abweichung den zweiten Motor in der Leistung zu reduzieren oder anzuhalten. Hierdurch können die zuvor beschriebenen Aspekte des Phasenstroms des ersten Motors auf den zweiten Motor übertragen und dort umgesetzt und genutzt werden.

Gemäß einem weiteren Aspekt der Erfindung weist die Ansteuerungsvorrichtung einen ersten Spannungsmesser des ersten bürstenlosen Motors, welcher ausgebildet ist, eine Phasenspannung des ersten bürstenlosen Motors zu erfassen und dem ersten Rechner zur Verfügung zu stellen, und einen zweiten Spannungsmesser des ersten bürstenlosen Motors, welcher ausgebildet ist, die Phasenspannung des ersten bürstenlosen Motors zu erfassen und dem zweiten Rechner zur Verfügung zu stellen, wobei die beiden Rechner ausgebildet sind, jeweils die beiden erfassten Phasenspannungen des ersten bürstenlosen Motors miteinander zu vergleichen und im Falle einer vorbestimmten Abweichung den ersten bürstenlosen Motor in der Leistung zu reduzieren oder anzuhalten. Hierdurch können die zuvor beschriebenen Aspekte des Phasenstroms des ersten bzw. des zweiten bürstenlosen Motors auf die Phasenspannung des ersten bürstenlosen Motors übertragen und dort umgesetzt und genutzt werden.

Gemäß einem weiteren Aspekt der Erfindung weist die Ansteuerungsvorrichtung einen ersten Spannungsmesser des zweiten Motors, welcher ausgebildet ist, eine Phasenspannung des zweiten Motors zu erfassen und dem zweiten Rechner zur Verfügung zu stellen, und einen zweiten Spannungsmesser des zweiten Motors, welcher ausgebildet ist, die Phasenspannung des zweiten Motors zu erfassen und dem ersten Rechner zur Verfügung zu stellen, wobei die beiden Rechner ausgebildet sind, jeweils die beiden erfassten Phasenspannungen des zweiten Motors miteinander zu vergleichen und im Falle einer vorbestimmten Abweichung den zweiten Motor in der Leistung zu reduzieren oder anzuhalten. Hierdurch können die zuvor beschriebenen Aspekte der Phasenspannung des ersten bürstenlosen Motors auf den zweiten Motor übertragen und dort umgesetzt und genutzt werden.

Die Erfindung betrifft auch ein Haushaltsgerät mit wenigstens zwei mindestens zweiphasigen Motoren, vorzugsweise ohne Rotorlagesensor, und mit einer Ansteuerungsvorrichtung wie zuvor beschrieben. Hierdurch können die zuvor beschriebenen Eigenschaften und Vorteile einer erfindungsgemäßen Ansteuerungsvorrichtung bei einem Haushaltsgerät umgesetzt und genutzt werden.

Gemäß einem Aspekt der Erfindung ist das Haushaltsgerät ein Staubsauger, wobei der erste bürstenlose Motor ausgebildet ist, ein Gebläse anzutreiben, und wobei der zweite, bevorzugt ebenfalls bürstenlose, Motor ausgebildet ist, eine Bodenbürste anzutreiben. Da bei einem derartigen Staubsauger üblicherweise ohnehin zwei Motoren vorhanden sind, kann die Umsetzung einer erfindungsgemäßen Ansteuerungsvorrichtung insbesondere bei einem derartigen Haushaltsgerät besonders einfach und wirkungsvoll erfolgen. Insbesondere kann eine Umsetzung einer erfindungsgemäßen redundanten thermischen Überwachung bei einem Staubsauger dessen Gewicht und bzw. oder Größe reduzieren bzw. geringhalten, was jeweils vom Benutzer als vorteilhaft angesehen werden kann.

Gemäß einem weiteren Aspekt der Erfindung weist das Haushaltsgerät einen, vorzugsweise wiederaufladbaren, elektrischen Energiespeicher auf und ist ausgebildet, mittels der gespeicherten elektrischen Energie des elektrischen Energiespeichers betrieben zu werden. Da durch die erfindungsgemäße redundante thermische Überwachung auch der hierfür erforderliche Bedarf an elektrischer Energie geringgehalten werden kann, kann durch dessen Umsetzung bei einem Haushaltsgerät mit elektrischem Energiespeicher dessen Energiebedarf geringgehalten und hierdurch die Nutzungsdauer des Haushaltsgeräts erhöht werden.

Ein Ausführungsbeispiel der Erfindung ist in den Zeichnungen rein schematisch dargestellt und wird nachfolgend näher beschrieben. Es zeigt
- Figur 1: eine Schaltung eines bekannten bürstenlosen Motors;
- Figur 2: Verläufe der Phasenspannungen der drei Phasen des bürstenlosen Motors der Figur 1;
- Figur 3: eine bekannte Ansteuerungsvorrichtung zum Betrieb zweier bürstenloser Motoren mittels jeweils eines Rechners inklusive jeweiliger thermischer Überwachung;
- Figur 4: die Darstellung der Figur 3 mit jeweils zusätzlicher redundanter thermischer Überwachung mittels Analogschaltkreise; und
- Figur 5: die Darstellung der Figur 3 mit erfindungsgemäßer redundanter thermischer Überwachung mittels der Rechner selbst.

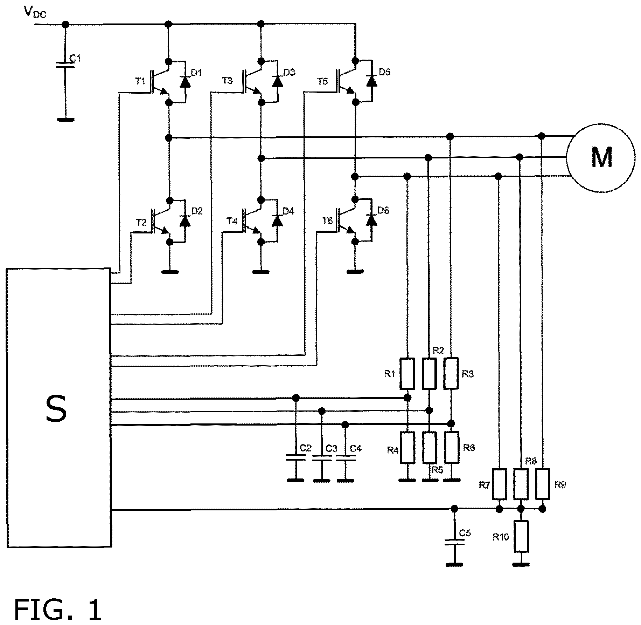

Figur 1 zeigt eine Schaltung eines bekannten bürstenlosen Motors M. Der bürstenlose Motor M, kurz BLDC-Motor M, wird über eine Steuerungseinheit S in Form eines geregelten Frequenzumrichters S angesteuert bzw. betrieben. Aus einer Gleichspannung V_{DC} als Zwischenkreisspannung V_{DC} wird über eine B6-Brücke mit sechs Schaltelementen (MOSFETs oder Transistoren) T1-T6 und sechs Dioden D1-D6 ein dreiphasiges Drehfeld an den BLDC-Motor M gelegt. Hierdurch wird eine Rotation eines Rotors (nicht dargestellt) des BLDC-Motors M im Betrieb bewirkt.

Damit das Drehfeld, welches auf den Stator (nicht dargestellt) des BLDC-Motors M gegeben wird, passend zur Rotorlage ist, muss die Rotorlage bestimmt werden. In der Vergangenheit wurde dies über einen Sensor am BLDC-Motor M getan. Mit dem Aufkommen der sensorlosen Regelung wurde der Sensor durch die Messung elektrischer Größen in Kombination mit einem Software-Motormodell seitens der Steuerungseinheit S ersetzt. Zu diesem Zweck wurden die Phasenspannungen U_{Phase} der drei Phasen U, V, W und auch die Sternpunktspannung gemessen. Die Sternpunktspannung kann entweder am Sternpunkt des BLDC-Motors M gemessen oder über einen "künstlichen Sternpunkt" nachgestellt und gemessen werden. Die Schaltung der ohmschen Widerstände R8-R10 und des Kondensators C5 stellt den künstlichen Sternpunkt dar. Bei einem BLDC-Motor M mit Dreieckschaltung wird üblicherweise nur mit dem künstlichen Sternpunkt gearbeitet.

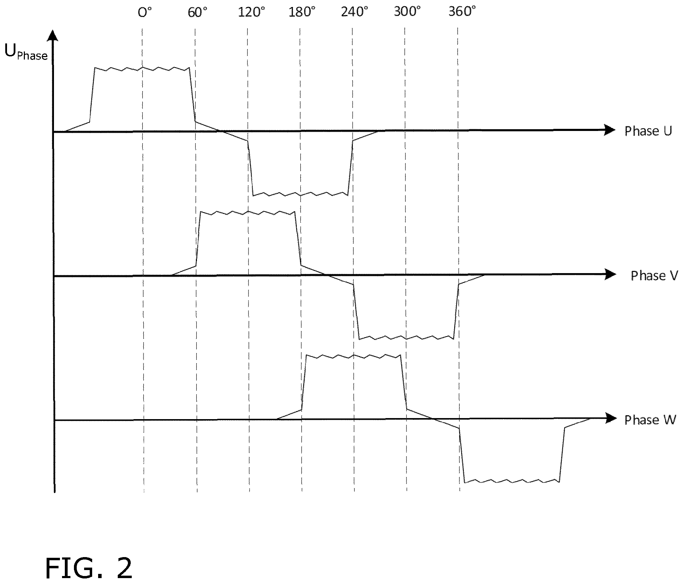

Figur 2 zeigt die Verläufe der Phasenspannungen U_{Phase} der drei Phasen U, V, W des bürstenlosen Motors M der Figur 1. Wie dem zeitlichen Verlauf der Phasenspannung U_{Phase} der Phase U zu entnehmen ist, so wird die Phase U 120° (zwei Sektoren) lang mit einer positiven Spannung aktiv beaufschlagt. Einen Sektor lang ist die Phase U stromlos. In dieser Zeit kann die induzierte Spannung EMK der Phase U gemessen werden, welche auch als elektromotorische Kraft (EMK) bezeichnet wird.

Die Nulllinie bei der Phasenspannung U_{Phase} ist die Sternpunktspannung. Dort, wo die Phasenspannung U_{Phase} die Sternpunktspannung kreuzt, liegt ein sogenannter Nulldurchgang der jeweiligen Phasenspannung U_{Phase} vor. Dieser Zeitpunkt des Nulldurchgangs der Phasenspannung U_{Phase} ist der Moment, wo der Stator und der Rotor zueinander ausgerichtet sind. Auf diese Nulldurchgänge wird gemessen. Somit kann in der Phase U bei einem einpoligen BLDC-Motor M zwei Mal ein Nulldurchgang während einer mechanischen Umdrehung (0° bis 360°) gemessen werden. Misst man in allen drei Phasen U, V, W den Strom, so kann während einer mechanischen Umdrehung sechs Mal die Rotorlage bestimmt werden. Auf diesem Prinzip bauen alle Steuerungseinheiten S von herkömmlichen BLDC-Motoren M auf.

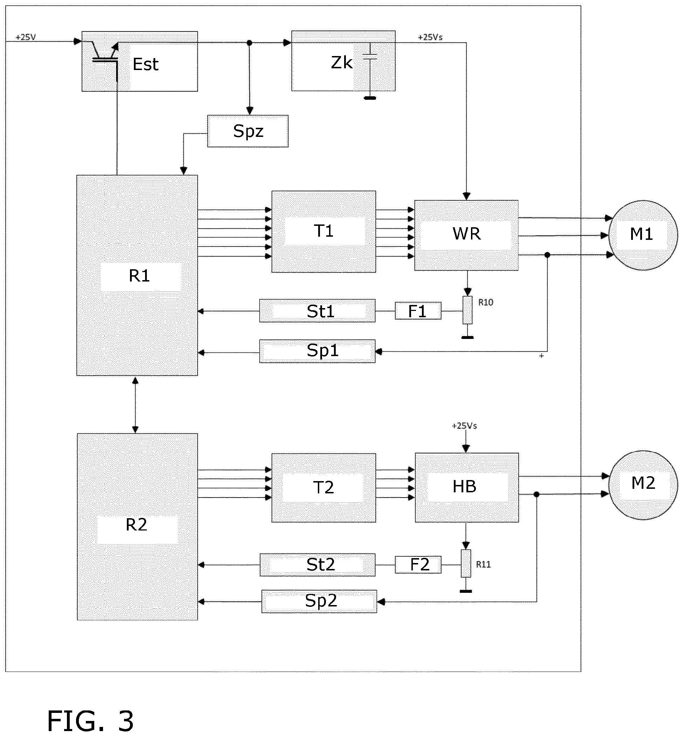

Derartige BLDC-Motoren M können beispielsweise in akkubetriebenen Handstaubsaugers, kurz Akkusauger, verwendet werden, welche klassischerweise zwei derartige Antriebe aufweisen. Zum einen wird ein erster BLDC-Motor M1 als Gebläsemotor und zum anderen ein zweiter BLDC-Motor M2 zum Antreiben der Bodenbürste verwendet (der zweite Motor muss jedoch nicht zwingend bürstenlos sein, sondern kann alternativ auch bürstenbehaftet sein). Beide BLDC-Motoren M1, M2 werden von einer Elektronik aus als Ansteuerungsvorrichtung angesteuert, siehe Figur 3. Jeder der beiden BLDC-Motoren M1, M2 weist eine thermische Überwachung auf, welche durch die Ansteuerungsvorrichtung umgesetzt wird. Die thermische Überwachung ist notwendig, weil ein falsches Ansteuern der BLDC-Motoren M1, M2 oder auch ein blockierter Rotor einer der BLDC-Motoren M1, M2 zu einem hohen Strom in den Spulen des entsprechenden BLDC-Motors M1, M2 und damit zu einer Übererwärmung bzw. zu einer Überhitzung des BLDC-Motors M1, M2 führen kann.

Wie in der Figur 3 dargestellt wird der erste BLDC-Motor M1 als dreiphasiger Gebläsemotor M1 über einen ersten Treiber T1 von einem klassischen dreiphasigen Umrichter WR angesteuert wird. Der zweite BLDC-Motor M2 ist ein zweiphasiger Bodenbürstenmotor M2, der über einen zweiten Treiber T2 von einer H-Brücke HB angesteuert wird.

Der erste BLDC-Motor M1 kann über die Messung der elektrischen Größen wie zum Beispiel der Zwischenkreisspannung V_{DC} mittels eines Spannungsmessers Spzs, des Motorstroms mittels eines ersten Strommessers St1 und der Phasenspannung U_{Phase} mittels eines ersten Spannungsmessers Sp1 von einem ersten Rechner R1 hinsichtlich der Temperatur überwacht werden. Der erste Rechner R1 kann bestimmen, wie lange welcher Strom geflossen ist und kann über ein thermisches Motormodell den ersten BLDC-Motor M1 gegen Übertemperatur schützen. Mithilfe der bekannten elektrischen Größen kann der erste Rechner R1 erkennen, wann der erste BLDC-Motor M1 zu warm wird, d.h. ein Grenzwert der Temperatur erreicht oder überschritten wird. Ist eine Übertemperatur erkannt worden, so wird der erste BLDC-Motor M1 über die Einschaltstrombegrenzung Est abgeschaltet.

Dies gilt entsprechend für den zweiten BLDC-Motor M2, weshalb die Ansteuerungsvorrichtung hierzu einen ersten Strommesser St1 und einen ersten Spannungsmesser Sp1 für den zweiten BLDC-Motor M2 sowie einen zweiten Rechner R2 aufweist.

Wenn beim Ansteuern der beiden BLDC-Motoren M1, M2 ein Fehler auftritt, sei es in dem softwareseitigen Ansteuern, sei es durch eine mechanische Blockade des Rotors eines der beiden BLDC-Motoren M1, M2 oder dergleichen, so kann es schnell zu einer Übererwärmung des betroffenen BLDC-Motors M1, M2 kommen. Je nach Einsatz des Akkusaugers und des Sicherheitslevels ist daher eine redundante oder auch zweifach redundante Überwachung der Temperaturen der beiden BLDC-Motoren M1, M2 vorteilhaft.

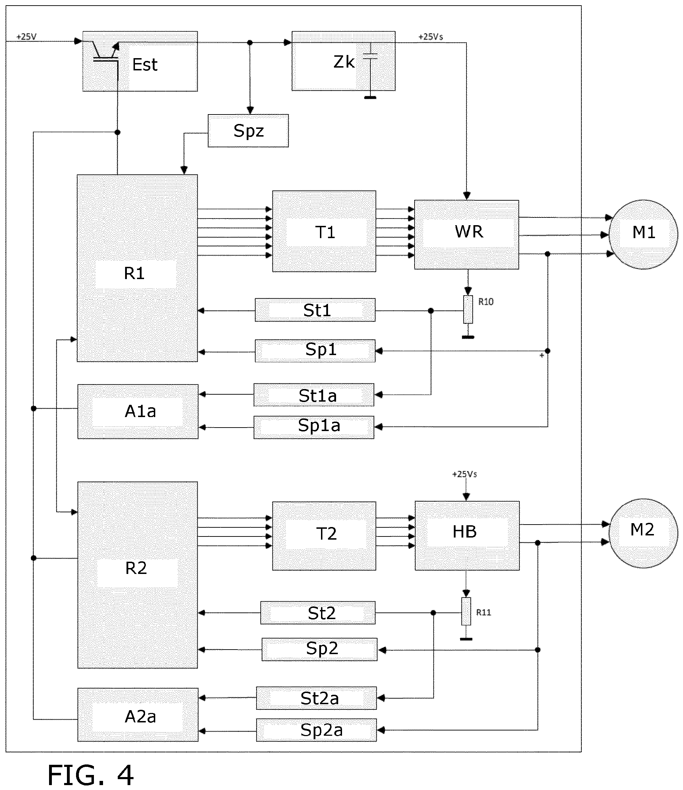

Üblicherweise wird die thermische Überwachung verdoppelt vorgesehen, indem sowohl die Messung der zuvor beschriebenen elektrischen Größen als auch deren Auswertung redundant erfolgt, wie in der Figur 4 dargestellt. Hierzu werden keine zwei weiteren Rechner eingesetzt, da dies zu aufwendig und teuer wäre, um lediglich den reduzierten Funktionsumfang der thermischen Überwachung auszuführen. Vielmehr werden zwei Analogschaltkreise A1a, A2a verwendet, welchen jeweils der separat erfasste Motorstrom und die separat erfasst Phasenspannung U_{Phase} unabhängig vom jeweiligen Rechner R1, R2 zugeführt wird. Entsprechend weist die Ansteuerungsvorrichtung einen zweiten Strommesser St1a und einen zweiten Spannungsmesser Sp1a des ersten BLDC-Motors M1 auf, welche ihre erfassten Größen dem ersten Analogschaltkreis A1a zur Verfügung stellen. Ferner weist die Ansteuerungsvorrichtung einen zweiten Strommesser St2a und einen zweiten Spannungsmesser Sp2a des zweiten BLDC-Motors M2 auf, welche ihre erfassten Größen dem zweiten Analogschaltkreis A2a zur Verfügung stellen. Auf diese bekannte Art und Weise können der ersten BLDC-Motor M1 und der zweite BLDC-Motor M2 jeweils redundant thermisch überwacht und vor Übererwärmung bzw. vor Überhitzung geschützt werden.

Die Verwendung der beiden Analogschaltkreise A1a, A2a ist in der Regel sehr aufwendig, weil jeweils die elektrischen Größen miteinander sinnvoll kombinieren werden müssen. Aufwendig bedeutet dabei, dass die beiden Analogschaltkreise A1a, A2a jeweils aus vielen elektronischen Einzelteilen bestehen oder mittels einer kostenintensiven programmierbaren Logik umgesetzt sind. In jedem Fall führt auch dies zu nicht unerheblichen zusätzlichen Kosten, um eine redundante thermische Überwachung für beide BLDC-Motoren M1, M2 zu erhalten.

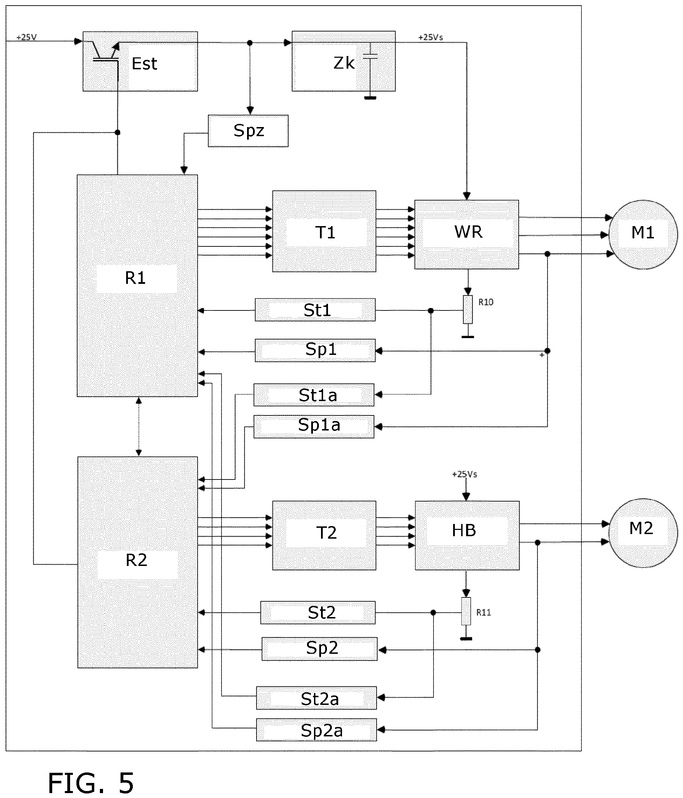

Erfindungsgemäß wird daher genutzt, dass bei einem derartigen Akkusauger bereits ohnehin zwei BLDC-Motoren M1, M2 vorhanden sind, in dem beide BLDC-Motoren M1, M2 jeweils von beiden Rechnern R1, R2 überwacht werden, siehe Figur 5. Auch dies führt zu einer redundanten thermischen Überwachung der beiden BLDC-Motoren M1, M2, jedoch ohne hierzu zusätzliche Rechner oder die zusätzlichen Analogschaltkreise A1a, A2a der Figur 4 verwenden zu müssen.

Hierzu werden die erfassten Größen des zweiten Strommessers St1a und des zweiten Spannungsmessers Sp1a des ersten BLDC-Motors M1 dem zweiten Rechner R2 zugeführt, so dass sowohl auf dem ersten Rechner R1 als auch auf den zweiten Rechner R2 unabhängig voneinander eine thermische Überwachung des ersten BLDC-Motors M1 ausgeführt werden kann, welche auf denselben Größen beruht, welche jedoch unabhängig voneinander doppelt erfasst werden. Wird somit von einem der beiden Rechner R1, R2 eine thermische Überlastung erkannt, so kann hierauf wie zuvor beschrieben reagiert werden. Dies gilt entsprechend für den zweiten BLDC-Motor M2. Dies kann zwischen den beiden Rechnern R1, R2 kommuniziert werden, um am betroffenen BLDC-Motor M1, M2 die entsprechende Reaktion umzusetzen.

Alternativ kann auch erst dann eine thermische Überlastung als erkannt gelten, falls beide Rechner R1, R2 zu diesem Ergebnis kommen, da diese die gleichen Größen des Motorstroms und der Phasenspannung U_{Phase} sowohl des ersten BLDC-Motors M1 als auch des zweiten BLDC-Motors M2 erhalten und gleich verarbeiten, so dass bei fehlerfreier Durchführung auch das Ergebnis der beiden Rechner R1, R2 gleich sein muss. Andernfalls kann von einem unzutreffenden vermeintlichen Erkennen einer thermischen Überlastung eines der beiden BLDC-Motoren M1, M2 durch einen der beiden Rechner R1, R2 ausgegangen werden und es kann eine Reaktion unterbleiben, um den betroffenen BLDC-Motor M1, M2 nicht ungerechtfertigt im Betrieb zu stören.

Darüber hinaus können die beiden Rechner R1, R2 auch einen Vergleich untereinander durchführen, ob die Größen des Motorstroms und bzw. oder der Phasenspannung U_{Phase} des ersten BLDC-Motors M1 durch den ersten Strommessers St1 und durch den zweiten Strommessers St1a sowie durch den ersten Spannungsmesser Sp1 und durch den zweiten Spannungsmesser Sp1a zutreffend erfasst wurden, indem die doppelt erfassten Werte dieser Größen untereinander verglichen werden. Stimmen die Werte dieser Größen in einem ausreichenden Maß überein, welches durch einen vorbestimmten Grenzwert der Toleranz vorgegeben werden kann, so kann eine korrekte Erfassung dieser Größen angenommen werden. Entsprechend kann der Betrieb des ersten BLDC-Motors M1 fortgesetzt werden, sofern die thermische Überwachung dies zulässt. Andernfalls kann ebenfalls ein Beenden des Betriebs des ersten BLDC-Motors M1 erfolgen, da dessen thermische Überwachung wie zuvor beschrieben in diesem Fall nicht mehr gewährleistet werden kann. Dies gilt ebenso für den ersten BLDC-Motors M2.

### Bezugszeichenliste (Bestandteil der Beschreibung)

- C1-C7: Kondensatoren
- D1-D6: Dioden der B6-Brücke
- T1-T6: Transistoren der B6-Brücke
- R1-R13: ohmsche Widerstände

- V_{DC}: Zwischenkreisspannung
- U: Phase
- V: Phase
- W: Phase
- U_{Phase}: Phasenspannung
- EMK: induzierte Spannung; elektromotorische Kraft

- M: (zweiphasiger) bürstenloser Motor; BLDC-Motor
- S: Steuerungseinheit; Rechner; geregelter Frequenzumrichter

- A1a: erster Analogschaltkreis
- A2a: zweiter Analogschaltkreis
- Est: Einschaltstrombegrenzung
- F1: erster Filter
- F2: zweiter Filter
- HB: H-Brücke
- M1: erster (dreiphasiger) bürstenloser Motor; erster BLDC-Motor; Gebläsemotor
- M2: zweiter (zweiphasiger) Motor; zweiter BLDC-Motor; Bodenbürstenmotor
- R1: erster Rechner
- R2: zweiter Rechner
- St1: erster Strommesser des ersten bürstenlosen Motors M1
- St1a: zweiter Strommesser des ersten bürstenlosen Motors M1
- St2: erster Strommesser des zweiten Motors M2
- St2a: zweiter Strommesser des zweiten Motors M2
- Sp1: erster Spannungsmesser des ersten bürstenlosen Motors M1
- Sp1a: zweiter Spannungsmesser des ersten bürstenlosen Motors M1
- Sp2: erster Spannungsmesser des zweiten Motors M2
- Sp2a: zweiter Spannungsmesser des zweiten Motors M2
- Spz: Spannungsmesser des Zwischenkreises
- T1: erster Treiber
- T2: zweiter Treiber
- WR: Wechselrichter
- Zk: Zwischenkreisschaltung

## Patentansprüche

1. Ansteuerungsvorrichtung zur thermischen Überwachung von wenigstens zwei mindestens zweiphasigen Motoren (M1, M2), vorzugsweise ohne Rotorlagesensor,
mit einem ersten Rechner (R1), welcher ausgebildet ist, sowohl den ersten bürstenlosen Motor (M1) als auch den zweiten, bevorzugt bürstenlosen, Motor (M2) thermisch zu überwachen, und
mit einem zweiten Rechner (R2), welcher ausgebildet ist, sowohl den ersten bürstenlosen Motor (M1) als auch den zweiten Motor (M2) thermisch zu überwachen, **dadurch gekennzeichnet, dass**
beide Rechner (R1, R2) ausgebildet sind, jeweils sowohl den ersten bürstenlosen Motor (M1) als auch den zweiten Motor (M2) in der Leistung zu reduzieren oder anzuhalten, falls von wenigstens einem der beiden Rechner (R1, R2) eine thermische Überlastung erkannt wird.

2. Ansteuerungsvorrichtung nach Anspruch 1, **dadurch gekennzeichnet, dass**
beide Rechner (R1, R2) ausgebildet sind, jeweils sowohl den ersten bürstenlosen Motor (M1) als auch den zweiten Motor (M2) in der Leistung zu reduzieren oder anzuhalten, falls von beiden Rechnern (R1, R2) eine thermische Überlastung erkannt wird.

3. Ansteuerungsvorrichtung nach einem der vorangehenden Ansprüche, **gekennzeichnet durch**
einen ersten Strommesser (St1) des ersten bürstenlosen Motors (M1), welcher ausgebildet ist, einen Phasenstrom des ersten bürstenlosen Motors (M1) zu erfassen und dem ersten Rechner (R1) zur Verfügung zu stellen, und durch
einen zweiten Strommesser (St1a) des ersten bürstenlosen Motors (M1), welcher ausgebildet ist, den Phasenstrom des ersten bürstenlosen Motors (M1) zu erfassen und dem zweiten Rechner (R2) zur Verfügung zu stellen,
wobei die beiden Rechner (R1, R2) ausgebildet sind, jeweils die beiden erfassten Phasenströme des ersten bürstenlosen Motors (M1) miteinander zu vergleichen und im Falle einer vorbestimmten Abweichung den ersten bürstenlosen Motor (M1) in der Leistung zu reduzieren oder anzuhalten.

4. Ansteuerungsvorrichtung nach einem der vorangehenden Ansprüche, **gekennzeichnet durch**
einen ersten Strommesser (St2) des zweiten Motors (M2), welcher ausgebildet ist, einen Phasenstrom des zweiten Motors (M2) zu erfassen und dem zweiten Rechner (R2) zur Verfügung zu stellen, und durch
einen zweiten Strommesser (St2a) des zweiten Motors (M2), welcher ausgebildet ist, den Phasenstrom des zweiten Motors (M2) zu erfassen und dem ersten Rechner (R1) zur Verfügung zu stellen,
wobei die beiden Rechner (R1, R2) ausgebildet sind, jeweils die beiden erfassten Phasenströme des zweiten Motors (M2) miteinander zu vergleichen und im Falle einer vorbestimmten Abweichung den zweiten Motor (M2) in der Leistung zu reduzieren oder anzuhalten.

5. Ansteuerungsvorrichtung nach einem der vorangehenden Ansprüche, **gekennzeichnet durch**
einen ersten Spannungsmesser (Sp1) des ersten bürstenlosen Motors (M1), welcher ausgebildet ist, eine Phasenspannung (U_{Phase}) des ersten bürstenlosen Motors (M1) zu erfassen und dem ersten Rechner (R1) zur Verfügung zu stellen, und durch
einen zweiten Spannungsmesser (Sp1a) des ersten bürstenlosen Motors (M1), welcher ausgebildet ist, die Phasenspannung (U_{Phase}) des ersten bürstenlosen Motors (M1) zu erfassen und dem zweiten Rechner (R2) zur Verfügung zu stellen,
wobei die beiden Rechner (R1, R2) ausgebildet sind, jeweils die beiden erfassten Phasenspannungen (U_{Phase}) des ersten bürstenlosen Motors (M1) miteinander zu vergleichen und im Falle einer vorbestimmten Abweichung den ersten bürstenlosen Motor (M1) in der Leistung zu reduzieren oder anzuhalten.

6. Ansteuerungsvorrichtung nach einem der vorangehenden Ansprüche, **gekennzeichnet durch**
einen ersten Spannungsmesser (Sp2) des zweiten Motors (M2), welcher ausgebildet ist, eine Phasenspannung (U_{Phase}) des zweiten Motors (M2) zu erfassen und dem zweiten Rechner (R2) zur Verfügung zu stellen, und durch
einen zweiten Spannungsmesser (Sp2a) des zweiten Motors (M2), welcher ausgebildet ist, die Phasenspannung (U_{Phase}) des zweiten Motors (M2) zu erfassen und dem ersten Rechner (R1) zur Verfügung zu stellen,
wobei die beiden Rechner (R1, R2) ausgebildet sind, jeweils die beiden erfassten Phasenspannungen (U_{Phase}) des zweiten Motors (M2) miteinander zu vergleichen und im Falle einer vorbestimmten Abweichung den zweiten Motor (M2) in der Leistung zu reduzieren oder anzuhalten.

7. Haushaltsgerät
mit wenigstens zwei mindestens zweiphasigen Motoren (M1, M2), wobei ein erster Motor (M1) bürstenlos ist, vorzugsweise ohne Rotorlagesensor, und
mit einer Ansteuerungsvorrichtung nach einem der vorangehenden Ansprüche.

8. Haushaltsgerät nach Anspruch 7, **dadurch gekennzeichnet, dass**
das Haushaltsgerät ein Staubsauger ist,
wobei der erste bürstenlose Motor (M1) ausgebildet ist, ein Gebläse anzutreiben, und
wobei der zweite Motor (M2) ausgebildet ist, eine Bodenbürste anzutreiben.

9. Haushaltsgerät nach Anspruch 7 oder 8, **dadurch gekennzeichnet, dass**
das Haushaltsgerät einen, vorzugsweise wiederaufladbaren, elektrischen Energiespeicher aufweist und ausgebildet ist, mittels der gespeicherten elektrischen Energie des elektrischen Energiespeichers betrieben zu werden.

## Claims

1. Control device for thermal monitoring of at least two at least two-phase motors (M1, M2), preferably without a rotor position sensor,
comprising a first computer (R1), which is designed to thermally monitor both the first brushless motor (M1) and the second preferably brushless motor (M2), and
comprising a second computer (R2), which is designed to thermally monitor both the first brushless motor (M1) and the second motor (M2), **characterised in that**
both computers (R1, R2) are designed to reduce the power of or to stop both the first brushless motor (M1) and the second motor (M2) if a thermal overload is detected by at least one of the two computers (R1, R2).

2. Control device according to claim 1, **characterised in that** both computers (R1, R2) are designed to reduce the power of or to stop both the first brushless motor (M1) and the second motor (M2) if a thermal overload is detected by the two computers (R1, R2).

3. Control device according to any of the preceding claims,
**characterised by**
a first ammeter (St1) of the first brushless motor (M1), which is designed to detect a phase current of the first brushless motor (M1) and to provide it to the first computer (R1), **and by**
a second ammeter (St1a) of the first brushless motor (M1), which is designed to detect the phase current of the first brushless motor (M1) and to provide it to the second computer (R2),
the two computers (R1, R2) being designed to compare the two detected phase currents of the first brushless motor (M1) with one another and, in the event of a predetermined deviation, to reduce the power of or stop the first brushless motor (M1).

4. Control device according to any of the preceding claims, **characterised by**
a first ammeter (St2) of the second motor (M2), which is designed to detect a phase current of the second motor (M2) and to provide it to the second computer (R2), **and by**
a second ammeter (St2a) of the second motor (M2), which is designed to detect the phase current of the second motor (M2) and to provide it to the first computer (R1),
the two computers (R1, R2) being designed to compare the two detected phase currents of the second motor (M2) with one another and, in the event of a predetermined deviation, to reduce the power of or stop the second motor (M2).

5. Control device according to any of the preceding claims, **characterised by**
a first voltmeter (Sp1) of the first brushless motor (M1), which is designed to detect a phase voltage (U_{Phase}) of the first brushless motor (M1) and to provide it to the first computer (R1), **and by**
a second voltmeter (Sp1a) of the first brushless motor (M1), which is designed to detect the phase voltage (U_{Phase}) of the first brushless motor (M1) and to provide it to the second computer (R2),
the two computers (R1, R2) being designed to compare the two detected phase voltages (U_{Phase}) of the first brushless motor (M1) with one another and, in the event of a predetermined deviation, to reduce the power of or stop the first brushless motor (M1).

6. Control device according to any of the preceding claims, **characterised by**
a first voltmeter (Sp2) of the second motor (M2), which is designed to detect a phase voltage (U_{Phase}) of the second motor (M2) and to provide it to the second computer (R2), **and by**
a second voltmeter (Sp2a) of the second motor (M2), which is designed to detect the phase voltage (U_{Phase}) of the second motor (M2) and to provide it to the first computer (R1),
the two computers (R1, R2) being designed to compare the two detected phase voltages (U_{Phase}) of the second motor (M2) with one another and, in the event of a predetermined deviation, to reduce the power of or stop the second motor (M2).

7. Domestic appliance
comprising at least two at least two-phase motors (M1, M2), wherein a first motor (M1) is brushless, preferably without a rotor position sensor, and
comprising a control device according to any of the preceding claims.

8. Domestic appliance according to claim 7, **characterised in that**
the domestic appliance is a vacuum cleaner,
the first brushless motor (M1) being designed to drive a fan, and
the second motor (M2) being designed to drive a floor brush.

9. Domestic appliance according to either claim 7 or claim 8,
**characterised in that**
the domestic appliance comprises a preferably rechargeable electrical energy store and is designed to be operated by means of the stored electrical energy of the electrical energy store.

## Revendications

1. Dispositif de commande pour la surveillance thermique d'au moins deux moteurs (M1, M2) au moins biphasés, de préférence sans capteur de position de rotor,
comportant un premier calculateur (R1) qui est configuré pour surveiller thermiquement à la fois le premier moteur (M1) sans balais et le second moteur (M2), de préférence sans balais, et
comportant un second calculateur (R2) qui est configuré pour surveiller thermiquement à la fois le premier moteur (M1) sans balais et le second moteur (M2), **caractérisé en ce que**
les deux calculateurs (R1, R2) sont configurés pour réduire respectivement la puissance à la fois du premier moteur (M1) sans balais et du second moteur (M2) ou pour les arrêter dans le cas où une surcharge thermique est détectée par au moins l'un des deux calculateurs (R1, R2).

2. Dispositif de commande selon la revendication 1, **caractérisé en ce que** les deux calculateurs (R1, R2) sont configurés pour réduire respectivement la puissance à la fois du premier moteur (M1) sans balais et du second moteur (M2) ou pour les arrêter dans le cas où une surcharge thermique est détectée par les deux calculateurs (R1, R2).

3. Dispositif de commande selon l'une des revendications précédentes, **caractérisé par**
un premier ampèremètre (St1) du premier moteur (M1) sans balais, lequel premier ampèremètre est configuré pour détecter un courant de phase du premier moteur (M1) sans balais et pour le mettre à la disposition du premier calculateur (R1), et **par**
un second ampèremètre (St1a) du premier moteur (M1) sans balais, lequel second ampèremètre est configuré pour détecter le courant de phase du premier moteur (M1) sans balais et pour le mettre à la disposition du second calculateur (R2),
dans lequel les deux calculateurs (R1, R2) sont configurés pour comparer respectivement les deux courants de phase détectés du premier moteur (M1) sans balais entre eux et, en cas d'écart prédéterminé, pour réduire la puissance du premier moteur (M1) sans balais ou pour l'arrêter.

4. Dispositif de commande selon l'une des revendications précédentes, **caractérisé par**
un premier ampèremètre (St2) du second moteur (M2), lequel premier ampèremètre est configuré pour détecter un courant de phase du second moteur (M2) et pour le mettre à la disposition du second calculateur (R2), et **par**
un second ampèremètre (St2a) du second moteur (M2), lequel second ampèremètre est configuré pour détecter le courant de phase du second moteur (M2) et pour le mettre à la disposition du premier calculateur (R1),
dans lequel les deux calculateurs (R1, R2) sont configurés pour comparer respectivement les deux courants de phase détectés du second moteur (M2) entre eux et, en cas d'écart prédéterminé, pour réduire la puissance du second moteur (M2) ou pour l'arrêter.

5. Dispositif de commande selon l'une des revendications précédentes, **caractérisé par**
un premier voltmètre (Sp1) du premier moteur (M1) sans balais, lequel premier voltmètre est configuré pour détecter une tension de phase (U_{Phase}) du premier moteur (M1) sans balais et pour la mettre à la disposition du premier calculateur (R1), et **par**
un second voltmètre (Sp1a) du premier moteur (M1) sans balais, lequel second voltmètre est configuré pour détecter la tension de phase (U_{Phase}) du premier moteur (M1) sans balais et pour la mettre à la disposition du second calculateur (R2),
dans lequel les deux calculateurs (R1, R2) sont configurés pour comparer respectivement les deux tensions de phase (U_{Phase}) détectées du premier moteur (M1) sans balais entre elles et, en cas d'écart prédéterminé, pour réduire la puissance du premier moteur (M1) sans balais ou pour l'arrêter.

6. Dispositif de commande selon l'une des revendications précédentes, **caractérisé par**
un premier voltmètre (Sp2) du second moteur (M2), lequel premier voltmètre est configuré pour détecter une tension de phase (U_{Phase}) du second moteur (M2) et pour la mettre à la disposition du second calculateur (R2), et **par**
un second voltmètre (Sp2a) du second moteur (M2), lequel second voltmètre est configuré pour détecter la tension de phase (U_{Phase}) du second moteur (M2) et pour la mettre à la disposition du premier calculateur (R1),
dans lequel les deux calculateurs (R1, R2) sont configurés pour comparer respectivement les deux tensions de phase (U_{Phase}) détectées du second moteur (M2) entre elles et, en cas d'écart prédéterminé, pour réduire la puissance du second moteur (M2) ou pour l'arrêter.

7. Appareil électroménager
comportant au moins deux moteurs (M1, M2) au moins biphasés, dans lequel un premier moteur (M1) est sans balais, de préférence sans capteur de position de rotor, et
comportant un dispositif de commande selon l'une des revendications précédentes.

8. Appareil électroménager selon la revendication 7, **caractérisé en ce que**
l'appareil électroménager est un aspirateur,
dans lequel le premier moteur (M1) sans balais est conçu pour entraîner une soufflante, et
dans lequel le second moteur (M2) est conçu pour entraîner une brosse pour sol.

9. Appareil électroménager selon la revendication 7 ou 8,
**caractérisé en ce que**
l'appareil électroménager présente un accumulateur d'énergie électrique, de préférence rechargeable, et est configuré pour fonctionner au moyen de l'énergie électrique accumulée de l'accumulateur d'énergie électrique.
